# EUROPEAN PATENT APPLICATION

(11) **EP 4 851 261 A1**
(43) Date of publication of application: **09.12.2026**
(21) Application number: 25748291.9
(22) Date of filing: 23.01.2025
(51) Int. Cl.: C09K 5/04, F25B 1/00

(54) **METHOD FOR SUPPRESSING DISPROPORTIONATION REACTION OF REFRIGERATION CYCLE WORKING MEDIUM, REFRIGERATION CYCLE WORKING MEDIUM, AND REFRIGERATION CYCLE DEVICE**

(30) Priority: 31.01.2024 JP 2024012759
(71) Applicant: Panasonic Intellectual Property Management Co., Ltd., Kadoma-shi, Osaka 571-0057 (JP)
(72) Inventor: SAKATA, Naoya, Kadoma-shi Osaka 571-0057 (JP); MURAKAMI, Hikaru, Kadoma-shi Osaka 571-0057 (JP); HASHIMOTO, Takahiko, Kadoma-shi Osaka 571-0057 (JP); NAGAO, Nobuaki, Kadoma-shi Osaka 571-0057 (JP); TSUNOYAMA, Hironori, Kadoma-shi Osaka 571-0057 (JP)
(74) Representative: Eisenführ Speiser
(86) International application number: PCT/JP2025/001998
(87) International publication number: WO 2025/164483

(57) **Abstract**

In a refrigeration cycle in which a refrigeration-cycle working medium containing a refrigerant component, such as fluoroolefin, which undergoes a disproportionation reaction, circulates, a carbene is generated by a disproportionation reaction of the fluoroolefin. At this time, as a carbene scavenger, the refrigeration-cycle working medium further includes a compound, such as an organic hetero compound or a silane compound, which reacts with the carbene and has in a chemical structure thereof an X-H bond (X is O, S, or Si) that is a bond between a hydrogen atom and an oxygen atom (O), a sulfur atom (S), or a silicon atom (Si). Since the carbene scavenger captures the generated carbene, an increase of the carbene in the refrigeration cycle is inhibited, and this effectively inhibits or mitigates the disproportionation reaction of the fluoroolefin.

## Description

### Technical Field

The present invention relates to a method of inhibiting a refrigeration-cycle working medium which can effectively inhibit or mitigate a disproportionation reaction of fluoroolefin (fluoroalkene), such as 1,1,2-trifluoroethylene, and a refrigeration-cycle working medium which uses this method.

### Background Art

As a refrigeration-cycle working medium (a refrigerant or a heat medium), the use of fluoroolefin having an ozone depletion potential (ODP) of 0 and a lower global warming potential (GWP), especially hydrofluoroolefin (HFO), has been recently proposed. Known as representative HFOs are, for example, 1,1,2-trifluoroethylene (HFO1123) and difluoroethylene (HFO1132). The HFOs are lower in stability than conventional HFCs (hydrofluorocarbons) and the like. Therefore, the HFOs hardly remain in the atmosphere.

It is also known that since the stability of the HFO is low, a self-polymerization reaction which is called a disproportionation reaction tends to occur (such reaction is hereinafter referred to as the disproportionation reaction). The disproportionation reaction tends to occur by being induced by, for example, heat generated during the use of the refrigeration-cycle working medium. In addition, it is also known that since large heat dissipation is caused by the occurrence of the disproportionation reaction, the disproportionation reactions occur successively. As a result, a large amount of soot is generated, and this may deteriorate the reliability of a refrigeration cycle system or the reliability of a compressor and the like constituting the refrigeration cycle system.

The present applicants propose that when, for example, 1,1,2-trifluoroethylene is used as a refrigerant component of the refrigeration-cycle working medium, halomethane (PTL 1), saturated hydrocarbon (PTL 2), haloethane (PTL 3), a combination of these (PTL 4 or PTL 5), or difluoroiodomethane (PTL 6) as a representative example of an especially suitable disproportionation inhibitor is used as a component (disproportionation inhibitor) that inhibits the disproportionation reaction of the 1,1,2-trifluoroethylene.

### Citation List

### Patent Literature

PTL 1: Japanese Laid-Open Patent Application Publication No. 2017-145380
PTL 2: Japanese Laid-Open Patent Application Publication No. 2018-048271
PTL 3: Japanese Laid-Open Patent Application Publication No. 2018-104565
PTL 4: Japanese Laid-Open Patent Application Publication No. 2018-104566
PTL 5: Japanese Laid-Open Patent Application Publication No. 2019-034983
PTL 6: Japanese Laid-Open Patent Application Publication No. 2021-161316

### Summary of Invention

### Technical Problem

In consideration of various conditions that may affect the occurrence of the disproportionation reaction in a refrigeration cycle, PTLs 1 to 6 propose various disproportionation inhibitors and combinations thereof. These disproportionation inhibitors can effectively inhibit or mitigate the disproportionation reaction of fluoroolefin, such as 1,1,2-trifluoroethylene.

However, there remain many unknown points regarding the disproportionation reaction of the fluoroolefin. Therefore, in addition to the disproportionation inhibitors proposed in PTLs 1 to 6, it is required to consider a new method that can effectively inhibit or mitigate the disproportionation reaction.

The present invention was made to solve the above problem, and an object of the present invention is to provide a new method of effectively inhibiting or mitigating a disproportionation reaction of a refrigerant component which is contained in a refrigeration-cycle working medium and undergoes the disproportionation reaction.

### Solution to Problem

To solve the above problem, a method of inhibiting a disproportionation reaction of a refrigeration-cycle working medium according to the present disclosure is configured such that: in a refrigeration cycle in which the refrigeration-cycle working medium containing a refrigerant component that undergoes the disproportionation reaction circulates, when a carbene is generated by the disproportionation reaction of the refrigerant component, the refrigeration-cycle working medium further contains, as a carbene scavenger, a compound which reacts with the carbene and has in a chemical structure thereof an X-H bond (X is O, S, or Si) that is a bond between a hydrogen atom (H) and an oxygen atom (O), a sulfur atom (S), or a silicon atom (Si); and since the carbene scavenger captures the generated carbene, the increase of the carbene in the refrigeration cycle is inhibited, and this inhibits the disproportionation reaction of the refrigerant component.

According to the above configuration, the X-H bond of the compound having in the chemical structure thereof the X-H bond that is the bond between the hydrogen atom (H) and the heteroatom (X) that is O, S, or Si reacts with the carbene to capture the carbene. Since the organic hetero compound or the silane compound having the X-H bond has substantially no self-decomposing property, the working medium containing the organic hetero compound or the silane compound as the carbene scavenger is stable. Since the carbene capturing reaction has a relatively high activation energy, the working medium is stable, and therefore, the carbene scavenger can effectively capture the carbene while avoiding situations where the carbene scavenger promotes the disproportionation reaction of the refrigerant component. Thus, the disproportionation reaction of the refrigerant component can be inhibited even more effectively.

Moreover, the present disclosure also includes a refrigeration-cycle working medium including: a refrigerant component that undergoes a disproportionation reaction; and a compound which serves as a carbene scavenger that captures a carbene generated by the disproportionation reaction of the refrigerant component, reacts with the carbene, and has in a chemical structure thereof an X-H bond (X is O, S, or Si) that is a bond between a hydrogen atom (H) and an oxygen atom (O), a sulfur atom (S), or a silicon atom (Si).

Moreover, the present disclosure also includes a carbene scavenger for a refrigerant, the carbene scavenger including a compound having in a chemical structure thereof an X-H bond (X is O, S, or Si) that is a bond between a hydrogen atom (H) and an oxygen atom (O), a sulfur atom (S), or a silicon atom (Si).

The above object, other objects, features, and advantages of the present invention will be made clear by the following detailed explanation of preferred embodiments with reference to the attached drawings.

### Advantageous Effects of Invention

According to the above configurations, the present invention achieves an effect of being able to provide a new method of effectively inhibiting or mitigating a disproportionation reaction of a refrigerant component which is contained in a refrigeration-cycle working medium and undergoes the disproportionation reaction.

### Brief Description of Drawings

FIG. 1 is a schematic diagram showing one example of a state where an organic hetero compound that is one representative example of a carbene scavenger reacts with a carbene to generate a compound that is a singlet ground-state molecule in the present disclosure.
FIG. 2 is a schematic diagram showing major elements in a compressor included in a refrigeration cycle according to an embodiment of the present disclosure.
FIGS. 3A and 3B are schematic block diagrams each showing one example of a refrigeration cycle system to which the refrigeration cycle according to the embodiment of the present disclosure is applied.

### Description of Embodiments

### Findings and the like Underlying Present Disclosure

The present inventors have diligently studied to solve the above problem. As a result, the present inventors have uniquely found that: an organic hetero compound or a silane compound, which has not been considered at all so far in the field regarding the inhibiting of the disproportionation reaction, may contribute to the inhibiting or mitigating of the disproportionation reaction, the organic hetero compound or the silane compound having in a chemical structure thereof an X-H bond (X is O, S, or Si) that is a bond between a hydrogen atom and an oxygen atom (O), a sulfur atom (S), or a silicon atom (Si); and the organic hetero compound or the silane compound acts on not an active radical generated in association with the self-decomposition of the fluoroolefin but a carbene. Thus, the present invention has been made.

According to diligent studies by the present inventors, it was found that the carbene generated in association with the self-decomposition of the fluoroolefin is involved in the chain progression of the disproportionation reaction of the fluoroolefin. According to the above configuration, this carbene is captured by the organic hetero compound or the silane compound that is a carbene scavenger. Thus, since the increase of the carbene in the refrigeration cycle can be effectively inhibited, the disproportionation reaction of the fluoroolefin can be inhibited or mitigated.

In addition, although fluoroolefin has a self-decomposing property, each of the organic hetero compound and the silane compound serving as the carbene scavengers does not have the self-decomposing property. Therefore, when the organic hetero compound or the silane compound is contained in the refrigeration-cycle working medium, the stability of the working medium can be made relatively high.

Hereinafter, a representative embodiment of a method of inhibiting a disproportionation reaction of a refrigeration-cycle working medium according to the present disclosure, a representative mode of use of this method, and the like will be specifically described.

### Fluoroolefin

In the refrigeration-cycle working medium according to the present disclosure which is a target of the method of inhibiting the disproportionation reaction according to the present disclosure, at least fluoroolefin (fluoroalkene) that undergoes the disproportionation reaction is used as the refrigerant component.

Specific examples of the fluoroolefin that undergoes the disproportionation reaction include 1,1,2-trifluoroethylene (CF₂ = CHF, HFO1123), trans-1,2-difluoroethylene (CHF = CHF(E), HFO1132(E)), cis-1,2-difluoroethylene (CHF = CHF(Z), HFO1132(Z)), 1,1-difluoroethylene (CF₂ = CH₂, HFO1132a), and tetrafluoroethylene (CF₂= CF₂, FO1114). However, the fluoroolefin that undergoes the disproportionation reaction is not especially limited. Only one of these fluoroolefins may be used as the refrigerant component, or a combination of two or more of the fluoroolefins may be used as the refrigerant component.

Fluoroolefin includes an ethylene structure as a backbone, i.e., a double bond between a carbon atom and a carbon atom, and includes such a chemical structure that at least one of two hydrogen atoms bonded to one of the carbon atoms is replaced with a fluorine atom, or at least one of four hydrogen atoms bonded to both of the carbon atoms is replaced with a fluorine atom. In fluoroolefin, at least one of the hydrogen atoms may be replaced with another atom or another substituent.

For example, 1,1,2-trifluoroethylene includes such a structure that: both of two hydrogen atoms bonded to one of the carbon atoms (i.e., the carbon atom at a first position) of the ethylene structure are replaced with fluorine atoms; and one of two hydrogen atoms bonded to the other carbon atom (i.e., the carbon atom at a second position) is replaced with a fluorine atom.

Or, trans-1,2-difluoroethylene has such a structure that: one of two hydrogen atoms bonded to the carbon atom at the first position in the ethylene structure is replaced with a fluorine atom; and between two hydrogen atoms bonded to the carbon atom at the second position, only the hydrogen atom at a position which is not adjacent to the fluorine atom bonded to the carbon atom at the first position but is opposed to the fluorine atom, which is bonded to the carbon atom at the first position, across the double bond is replaced with a fluorine atom.

Since such fluoroolefin includes the ethylene backbone, i.e., the carbon-carbon double bond as described above, the double bond is easily decomposed. To be specific, ozone in the atmosphere generates hydroxyl radicals (OH radicals) by a photochemical reaction. However, since the hydroxyl radicals can undergo an addition reaction with respect to the double bond, fluoroolefin is easily decomposed. Therefore, fluoroolefin is less likely to influence ozone layer depletion and global warming.

It is also known that fluoroolefin undergoes a rapid disproportionation reaction by the above-described good decomposing property. As one representative example of fluoroolefin, 1,1,2-trifluoroethylene will be described. In this disproportionation reaction, a self-decomposition reaction in which molecules of 1,1,2-trifluoroethylene are decomposed occurs, and after this self-decomposition reaction, a polymerization reaction in which active radicals or carbenes (hereinafter collectively referred to as active species) produced by the decomposition react with 1,1,2-trifluoroethylene located nearby, a sooting reaction in which carbon fragments generated by dissociation polymerize to form soot, or the like occurs. When the active species are generated by heat generation or the like in a high-temperature high-pressure state, the active species and 1,1,2-trifluoroethylene repeatedly undergo the polymerization reaction, the sooting reaction, or both of them to undergo the disproportionation reaction. Since this disproportionation reaction generates heat, the active radicals are generated by this heat generation, and the disproportionation reaction is induced by the active radicals. As above, since the generation of the active radicals and the occurrence of the disproportionation reaction are caused successively, and a spontaneous self-decomposition reaction propagates to the other 1,1,2-trifluoroolefin, the disproportionation reaction rapidly proceeds.

Previously, the present applicants have diligently studied and found that the active radicals that induce the disproportionation reaction of 1,1,2-trifluoroethylene are mainly radicals, such as fluorine radicals (F radicals), difluoromethyl radicals (CF₂ radicals), and trifluoromethyl radicals (CF₃ radicals).

Therefore, the present applicants have tried to inhibit or mitigate the rapid disproportionation reaction in such a manner that under the condition that difluoromethane is used as the refrigerant component together with fluoroolefin, such as 1,1,2-trifluoroethylene, which undergoes the disproportionation reaction, a substance (disproportionation inhibitor) that can efficiently capture F radicals, CF₃ radicals, CF₂ radicals, and the like is added to the refrigeration-cycle working medium. As a result, the present applicants have uniquely found that a suitable disproportionation inhibitor may be obtained by the addition of the disproportionation inhibitors disclosed in PTLs 1 to 6.

The present inventors have further studied and newly found that the disproportionation reaction of the fluoroolefin can be effectively inhibited or mitigated by adding the organic hetero compound or the silane compound, which has in the chemical structure thereof the X-H bond that is a bond between a heteroatom (X) and a hydrogen atom (H), to the refrigeration-cycle working medium which contains the fluoroolefin. In addition, the present applicants have newly found that: unlike the disproportionation inhibitors which have been proposed by the present applicants so far, the organic hetero compound or the silane compound does not capture the radical but captures a carbene; and the carbene may be involved in the rapid progression of the disproportionation reaction of the fluoroolefin.

### Organic Hetero Compound or Silane Compound as Carbene Scavenger

In the method of inhibiting the disproportionation reaction of the refrigeration-cycle working medium according to the present disclosure, when a carbene is generated in association with the disproportionation reaction of the fluoroolefin in the refrigeration cycle in which the refrigeration-cycle working medium containing fluoroolefin circulates, the refrigeration-cycle working medium contains, as the carbene scavenger, the organic hetero compound or the silane compound which reacts with a carbene and has in the chemical structure thereof the X-H bond that is the bond between the heteroatom (X) and the hydrogen atom (H). To be specific, the refrigeration-cycle working medium according to the present disclosure contains fluoroolefin as the refrigerant component and also contains the organic hetero compound or the silane compound as the carbene scavenger.

In the present disclosure, the organic hetero compound used as the carbene scavenger may be an organic compound having the X-H bond in the chemical structure thereof. It should be noted that the heteroatom (X) is an oxygen atom (O), a sulfur atom (S), or a silicon atom (Si). A specific type of the organic hetero compound is not especially limited, and representative examples include an organic compound having 4 or fewer carbon atoms and a derivative thereof. More specific examples of the organic hetero compound include alcohols, thiols, and organosilanes each having 4 or fewer carbon atoms, and derivatives thereof.

In the present disclosure, the silane compound used as the carbene scavenger may be silane (SiH₄) or a derivative thereof. When the silane compound is a silane derivative and contains a carbon atom (C), the silane compound is classified as the organosilane, which is an organic hetero compound, or a derivative thereof.

In the present disclosure, specific types of alcohols, thiols, and organosilanes each having 4 or fewer carbon atoms and the derivatives thereof, and the silane compound and the derivative thereof, which are used as the carbene scavenger, are not especially limited, and representative examples include: the alcohol and the thiol represented by Formula (1) below and derivatives thereof; and the silane compound represented by Formula (2) below and a derivative thereof.

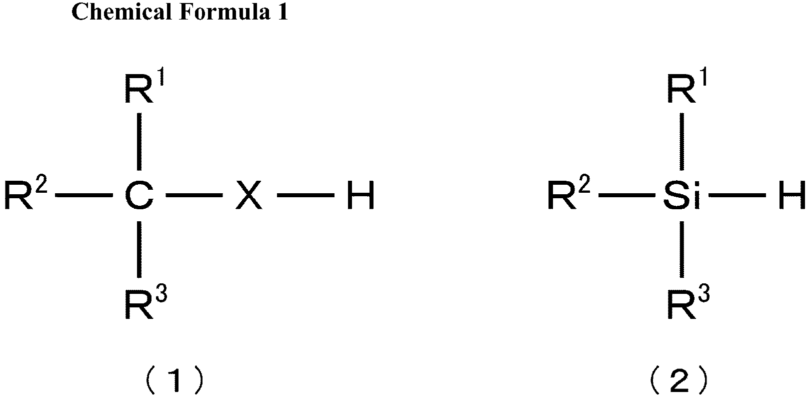

X:O, S

R¹~R³ : H, F, CI, Br, I, CH₃, CF₃, C₂H₅, C₂F₅, C₃H₇, C₃F₇

In Formula (1), when the heteroatom (X) is the oxygen atom (O), the compound represented by Formula (1) is an alcohol. When the heteroatom (X) is the sulfur atom (S), the compound represented by Formula (1) is a thiol. Moreover, each of R¹ to R³ in Formula (1) is independently an atom or an atomic group selected from the group consisting of a hydrogen atom (H), a fluorine atom (F), a chlorine atom (Cl), a bromine atom (Br), an iodine atom (I), a methyl group (CH₃),a trifluoromethyl group (CF₃), an ethyl group (C₂H₅), a pentafluoroethyl group (C₂F₅), a propyl group (C₃H₇), and a heptafluoromethyl group (C₃F₇).

When the organic hetero compound represented by Formula (1) is an alcohol (X is O), specific examples of the alcohol having 4 or fewer carbon atoms include methanol, ethanol, 1-propanol, 2-propanol, 1-butanol, 2-butanol, 2-methyl-1-propanol, and 2-methyl-2-propanol (tert-butanol). Moreover, examples of the derivatives of these alcohols include compounds in each of which the hydrogen atom (H) contained in each alcohol is substituted with a substituent other than an alkyl group. A representative example is a halogenated alcohol in which H is substituted with a halogen atom, such as F, Cl, Br, or I as described above.

In Examples 1 and 2 described below, hexafluoro-2-propanol (hexafluoroisopropyl alcohol) is used as a specific example of the carbene scavenger. Hexafluoro-2-propanol is a compound in which the hydrogen atom of the alcohol represented by Formula (1) is substituted with a fluorine atom, i.e., a halogen derivative (halogenated alcohol) of the organic hetero compound. Moreover, in Example 3 described below, other examples of the carbene scavenger that is an alcohol (X is O) include methanol and nonafluoro-tert-butanol (nonafluoro-tert-butyl alcohol).

When the organic hetero compound represented by Formula (1) is a thiol (X is S), specific examples of the thiol having 4 or fewer carbon atoms include methanethiol, ethanethiol, 1-propanethiol, 2-propanethiol, 1-butanethiol, 2-butanethiol, 2-methylpropane-1-thiol, and 2-methylpropane-2-thiol (tert-butylthiol). Moreover, examples of the derivatives of these thiols include compounds in each of which the hydrogen atom (H) contained in each thiol is substituted with a substituent other than an alkyl group. A representative example is a halogenated thiol in which H is substituted with a halogen atom, such as F, Cl, Br, or I as described above. In Example 3 described below, as examples of the carbene scavenger that is a thiol (X is S), methanethiol, hexafluoro-2-propanethiol, and 2-propanethiol are exemplified.

Examples of the silane compound represented by Formula (2) include: a silane (SiH₄) having one silicon atom, i.e., monosilane (having no carbon atoms); monomethylsilane (having 1 carbon atom); dimethylsilane (having 2 carbon atoms); monoethylsilane (having 2 carbon atoms); monopropylsilane (having 3 carbon atoms); ethylmethylsilane (having 3 carbon atoms); trimethylsilane (having 3 carbon atoms); diethylsilane (having 4 carbon atoms); and monoethyldimethylsilane (having 4 carbon atoms). Since these compounds except for monosilane having no carbon atoms are organosilanes, all of them correspond to monosilane derivatives and also correspond to organic hetero compounds.

Moreover, examples of the derivatives of these silane compounds include compounds in each of which the hydrogen atom (H) contained in each silane compound is substituted with a substituent other than an alkyl group. A representative example is a halogenated silane in which H is substituted with a halogen atom, such as F, Cl, Br, or I as described above. A halide of monosilane is a monosilane derivative, whereas a halide of the above-described organosilane corresponds to a monosilane derivative and also corresponds to an organosilane derivative. In Example 3 described below, as examples of the carbene scavenger that is the silane compound (X is Si), hexafluorodimethylsilane, dichlorosilane, and dimethylsilane are exemplified.

In the present disclosure, the monosilane derivative may be defined so as not to include organosilane. In the present disclosure, monosilane and the derivative thereof correspond to the silane compound (X is Si) having the X-H bond, but does not contain an organic group and thus does not correspond to the organic hetero compound. On the other hand, organosilane is the silane compound having the X-H bond and also corresponds to the organic hetero compound (X is Si) having the X-H bond. Therefore, it can be said that organosilane is both the silane compound and the organic hetero compound. However, when these are clearly distinguished, it can be defined that organosilane is classified as the organic hetero compound, and only the monosilane derivative having no organic group is classified as the silane compound.

As described above, each of R¹ to R³ in Formulas (1) and (2) can be independently substituted with a substituent (including a substituent atom) selected from the group (substituent group) consisting of H, F, Cl, Br, I, CH₃, CF₃, C₂H₅, C₂F₅, C₃H₇, and C₃F₇. Therefore, when two or more of R¹ to R³ are substituents other than a hydrogen atom, they may all be the same, some of them may be the same, or they may all be different from each other.

Moreover, in the organic hetero compound represented by Formula (1) and the silane compound (or the organic hetero compound) represented by Formula (2), R¹ to R³ are not limited to the substituents (atoms or atomic groups) constituting the above substituent group. The organic hetero compound represented by Formula (1) and the silane compound (or the organic hetero compound) represented by Formula (2) may be derivatives substituted with other substituents. Moreover, each of the organic hetero compound represented by Formula (1) and the silane compound represented by Formula (2) may be a compound having more than 4 carbon atoms.

For example, when the organic hetero compound represented by Formula (1) is an alcohol (X is O), and each of R¹ to R³ is any of CH₃, CF₃, C₂H₅, C₂F₅, C₃H₇, and C₃F₇, the carbon number of the alcohol is 5 or more in some cases. However, as long as the alcohol having 5 or more carbon atoms has reactivity for capturing a carbene, the alcohol falls within the carbene scavenger in the present disclosure.

Moreover, in the organic hetero compound represented by Formula (1) and the silane compound (or the organic hetero compound) represented by Formula (2), CH₃, CF₃, C₂H₅, C₂F₅, C₃H₇, and C₃F₇ are exemplified as the substituent, and the halogen atoms (F, Cl, Br, and I) are exemplified as the substituent atoms. However, the substituents (including the substituent atoms) are not limited to these. To be specific, an olefine derivative in the present disclosure is not limited to the halogen compound and the like and may be a derivative into which another atom or atomic group is introduced. Therefore, the carbene scavenger in the present disclosure is not limited to the organic hetero compound represented by Formula (1) and the derivative thereof, and the silane compound (or the organic hetero compound) represented by Formula (2) and the derivative thereof.

In the method of inhibiting the disproportionation reaction according to the present disclosure, a carbene that is a target captured by the carbene scavenger is not especially limited. A representative example of the carbene is at least one selected from the group consisting of CF₂, CHF, and CH₂. When one or more types of carbenes included in this group are generated by the self-decomposition of the fluoroolefin, these carbenes can be effectively captured by the organic hetero compound or the silane compound.

In the organic hetero compound or the silane compound as the carbene scavenger, the X-H bond contained in these compounds reacts with the carbene to convert the carbene into a methyl group or a fluoromethyl group. When the captured carbene is at least one selected from the group consisting of CF₂, CHF, and CH₂ described above, the compound to be produced (obtained by the conversion) is a compound having 5 or fewer carbon atoms and having a carbene-derived difluoromethyl group (CHF₂-), a carbene-derived monofluoromethyl group (CH₂F-), or a carbene-derived methyl group (CH₃-) in the molecular structure thereof. Unless otherwise noted, in the present embodiment, the term "fluoromethyl group" is used as a generic term encompassing a difluoromethyl group and a monofluoromethyl group.

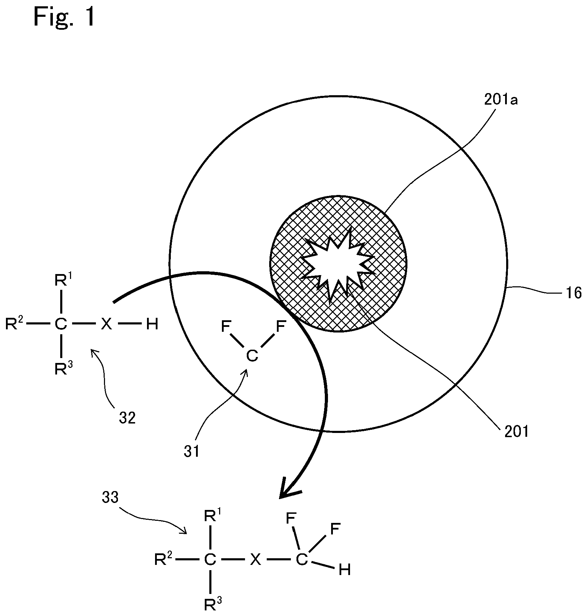

As described above, in the present disclosure, the chemical reaction (carbene capturing reaction) in which the above-described unsaturated compound captures the carbene and is converted into a compound having a methyl group, a monofluoromethyl group, or a difluoromethyl group, and the resultant inhibition of the disproportionation reaction of the fluoroolefin will be specifically described with reference to FIG. 1. In FIG. 1, the alcohol or the thiol represented by Formula (1) or a derivative thereof is exemplified as the organic hetero compound serving as the carbene scavenger, and CF₂ is exemplified as the carbene.

First, the process in which the disproportionation reaction of the fluoroolefin rapidly proceeds can be divided into an initial stage, an induction stage, and a chain-progression stage. In the initial stage, for example, the first self-decomposition of the fluoroolefin occurs by a trigger that is the generation of the electric discharge in a compressor 16. At this time, the active radicals tend to be generated. The induction stage is immediately after the initial stage and immediately before the chain-progression stage, i.e., immediately before the self-decomposition of the fluoroolefin proceeds explosively. In this stage, the carbenes are gradually generated and accumulate. It is thought that when the concentration of the carbene exceeds an upper limit in this induction stage, the self-decomposition reaction of the fluoroolefin rapidly proceeds.

Therefore, even when the active radicals are captured by the radical scavenger and thereby eliminated in the initial stage, the carbenes gradually accumulate in the induction stage. When the concentration of the carbene exceeds a predetermined value (critical condition), the process proceeds to the chain-progression stage, and the self-decomposition of the fluoroolefin proceeds explosively.

Herein, the method of inhibiting the disproportionation reaction of the refrigeration-cycle working medium according to the present disclosure is schematically illustrated as shown in, for example, FIG. 1. In FIG. 1, the compressor 16 is schematically illustrated as a large circle, and a site of the generation of the electric discharge that is one of triggers of the disproportionation reaction (the self-decomposition reaction of the fluoroolefin) in the compressor 16 is schematically illustrated as an electric discharge region 201 located at a center portion of the compressor 16 illustrated schematically.

The temperature of the electric discharge region 201 is assumed to be about 3,000 K to 10,000 K. A region 201a shown by shading in FIG. 1 and having a temperature of about 400 K to 1,000 K is generated around the electric discharge region 201. In the region 201a, products generated by the self-decomposition of the fluoroolefin accumulate. The products are not the final products of the self-decomposition reaction and can be regarded as "intermediates." Therefore, for convenience of explanation, this region 201a is referred to as a reaction intermediates accumulating region 201a. In FIG. 1, CF₂ is shown as one example of a carbene 31. The carbenes 31 (CF₂) gradually accumulate in the reaction intermediates accumulating region 201a.

According to the studies by the present inventors, as described above, it was found that: in the initial stage of the self-decomposition of the fluoroolefin, the generation of the active radicals is predominant; and in the next induction stage, the carbenes are gradually generated. Therefore, in the present disclosure, it was uniquely found that to inhibit the chain progression of the self-decomposition of the fluoroolefin, setting the concentration of the carbene accumulating in the induction stage to the predetermined value or less is important.

Therefore, in the present disclosure, as the carbene scavenger, the refrigeration-cycle working medium contains, for example, an organic hetero compound 32 (an alcohol, a thiol, or a derivative thereof) represented by Formula (1) above. The organic hetero compound 32 has high reactivity with the carbene 31 (CF₂) but has relatively low reactivity with other substances existing in the refrigeration cycle including the reaction intermediates accumulating region 201a. Therefore, the organic hetero compound 32 reacts to capture the carbene 31 by cleavage of its carbon-carbon double bond, and this produces a compound 33 having a fluoromethyl group.

In the example shown in FIG. 1, when the CR¹R²R³ group is simply an alkyl group, and the heteroatom (X) is an oxygen atom (O), the compound 33 having the fluoromethyl group is an alkyl difluoromethyl ether (alkoxydifluoromethane). Or, when the heteroatom (X) is a sulfur atom (S), the compound 33 having the fluoromethyl group is alkyl difluoromethyl sulfide (alkoxysulfanyl difluoromethane). When the carbene 31 is CHF, the compound 33 having the fluoromethyl group contains a monofluoromethyl group, not a difluoromethyl group. When the carbene is CH₂, the compound 33 is a compound containing a methyl group, not a fluoromethyl group.

The compound having the fluoromethyl group 33 is a singlet ground-state molecule which does not include an unpaired electron. Thus, the increase of the carbene 31 is effectively inhibited, and therefore, the chain progression of the self-decomposition of the fluoroolefin is inhibited or avoided. As a result, the disproportionation reaction can be effectively inhibited or mitigated.

As a result of diligent studies by the present inventors, the effect was confirmed by determining the intrinsic reaction coordinate for the organic hetero compound or the silane compound used as the carbene scavenger through quantum chemical calculations, calculating the activation energy of the carbene capturing reaction, and further calculating the reaction rate using transition state theory. As a result, although the carbene capturing reaction by the X-H bond is considered to have a relatively high activation energy, each of the organic hetero compound and the silane compound itself does not have self-decomposing property and is a relatively stable compound. Therefore, in the method of inhibiting the disproportionation reaction of the refrigeration-cycle working medium according to the present disclosure, each of the organic hetero compound and the silane compound is unlikely to promote the disproportionation reaction, and it is possible to even more effectively inhibit the disproportionation reaction of the fluoroolefin.

Moreover, according to the diligent studies by the present inventors, it was found that in the compressor, a carbene tends to be generated in not only the above-described electric discharge region 201 but also a region where a slide portion exists. Herein, the "slide portion" denotes a site where a plurality of slide members slide in a state where sliding surfaces thereof are in contact with each other.

When the ease of generation of the carbene is evaluated along a time axis, as described above, the carbene tends to be generated, for example, immediately after the occurrence of the electric discharge that is the trigger of the self-decomposition, after the radicals generated by the self-decomposition are eliminated, or immediately before the chain self-decomposition proceeds. Moreover, when the ease of generation of the carbene is evaluated based on regions in the compressor, the carbene tends to be generated, of course, in the region where the electric discharge that is the trigger of the self-decomposition may be generated, i.e., the electric discharge region (see FIG. 1). Furthermore, it was found that the carbene tends to be generated at the site, such as the slide portion, where the temperature and the pressure are high in the compressor and its vicinity.

In the present disclosure, the region where the slide portion exists in the compressor is referred to as a "slide region." In the method of inhibiting the disproportionation reaction according to the present disclosure, the increase of the carbene may be inhibited in at least one of the electric discharge region or the slide region or in both the electric discharge region and the slide region.

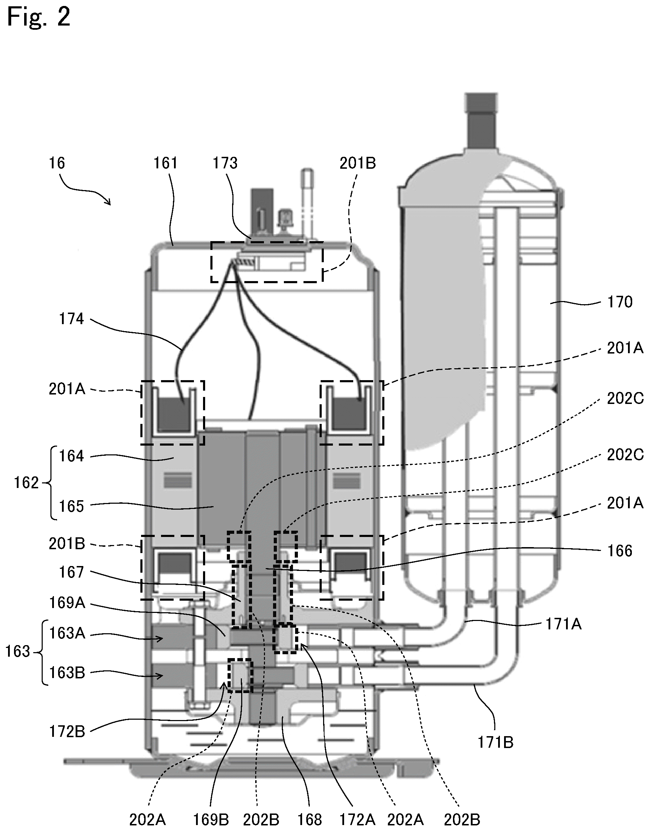

A representative example of the electric discharge region and a representative example of the slide region in the compressor will be specifically described with reference to FIG. 2. FIG. 2 shows a rotary (or scroll) compressor. Moreover, for convenience of explanation of the electric discharge region and the slide region, FIG. 2 shows only major elements related to these regions and does not show all major elements included in a typical compressor.

Moreover, the refrigeration cycle that is a target to which the method of inhibiting the disproportionation reaction according to the present disclosure is applied is not limited to a configuration including the rotary (or scroll) compressor shown in FIG. 2. Needless to say, the refrigeration cycle that is the target to which the present disclosure is applied may include a reciprocating compressor or another known type of compressor.

Similarly, in the present disclosure, regardless of whether or not the compressor is the rotary (or scroll) compressor, the elements included in the compressor are not limited to the major elements schematically illustrated in FIG. 2. In various known types of compressors, a site where the electric discharge may occur and its vicinity may be referred to as the "electric discharge region," and a site where the temperature and the pressure are high and its vicinity may be referred to as the "slide region" (or a high-temperature high-pressure region).

The compressor 16 according to the present embodiment shown in FIG. 2 includes an electric motor portion 162 and a compression mechanism portion 163 in a sealed container 161. The electric motor portion 162 and the compression mechanism portion 163 are coupled to each other by a shaft 166. The electric motor portion 162 includes at least a stator 164 and a rotor 165. The stator 164 is fixed to an inner surface of the sealed container 161. The rotor 165 rotates in the stator 164.

A hermetic power supply terminal 173 is hermetically welded to the sealed container 161. The hermetic power supply terminal 173 is electrically connected to an external power supply. Moreover, in the sealed container 161, the hermetic power supply terminal 173 is electrically connected to the stator 164 of the electric motor portion 162 through a wire 174. Thus, electric power is supplied from the external power supply to the electric motor portion 162.

As the compression mechanism portion 163, the compressor 16 includes a first compression mechanism portion 163A and a second compression mechanism portion 163B. The first compression mechanism portion 163A includes: a first piston 169A located in a first cylinder; and a vane that divides the inside of the first cylinder. When the first piston 169A revolves in the first cylinder, the first piston 169A draws in and compresses a low-pressure refrigerant gas (refrigeration-cycle working medium). A first compression chamber 172A is formed when the first piston 169A is located in the first cylinder so as to be able to revolve.

As with the first compression mechanism portion 163A, the second compression mechanism portion 163B also includes: a second piston 169B located in a second cylinder; and a vane that divides the inside of the second cylinder. When the second piston 169B revolves in the second cylinder, the second piston 169B draws in and compresses the low-pressure refrigerant gas (refrigeration-cycle working medium). A second compression chamber 172B is formed when the second piston 169B is located in the second cylinder so as to be able to revolve.

The shaft 166 fixes the rotor 165 and is rotatably supported by a main bearing 167 and an auxiliary bearing 168. Moreover, the first piston 169A and the second piston 169B are fixed to the shaft 166 with a phase difference of 180 degrees.

Lubricating oil is stored in a bottom portion in the sealed container 161. This lubricating oil lubricates, through an oil supply passage formed in the shaft 166, the slide portion formed by the shaft 166 and the main bearing 167 or the slide portion formed by the shaft 166 and the auxiliary bearing 168.

A first suction pipe 171A and a second suction pipe 171B are connected to a side surface of the sealed container 161. The first suction pipe 171A is connected to the first compression chamber 172A, and the second suction pipe 171B is connected to the second compression chamber 172B. An accumulator 170 is located upstream of the first suction pipe 171A and the second suction pipe 171B. The accumulator 170 separates a refrigerant, which has returned from the refrigeration cycle and is in a gas-liquid mixed state, into a liquid refrigerant and a gas refrigerant. The gas refrigerant flows through the first suction pipe 171A and the second suction pipe 171B.

By the rotation of the shaft 166, the first piston 169A revolves in the first compression chamber 172A, and the second piston 169B revolves in the second compression chamber 172B. By the revolutions of the first piston 169A and the second piston 169B, the gas refrigerant drawn from the first suction pipe 171A and the second suction pipe 171B into the first compression chamber 172A and the second compression chamber 172B is compressed in the first compression chamber 172A and the second compression chamber 172B. Then, the gas refrigerant is discharged into the sealed container 161. While the gas refrigerant moves upward through the electric motor portion 162, the lubricating oil is separated from the gas refrigerant, and the gas refrigerant is discharged to the outside of the sealed container 161 from a discharge pipe.

In the configuration example shown in FIG. 2, electric discharge regions 201A and 201B in the compressor 16 are regions surrounded by dashed-line frames, and the slide regions are regions surrounded by dotted-line frames. Among these, the electric discharge region 201A indicates a winding wire portion of the stator 164 constituting the electric motor portion 162 and its vicinity, and the electric discharge region 201B indicates the hermetic power supply terminal 173 and its vicinity.

On the other hand, in the configuration example shown in FIG. 2, examples of the slide portion (site where the slide members are combined with each other and slide in a state where the sliding surfaces thereof are in contact with each other) which tends to become high in temperature and pressure in the compressor 16 include: a portion between the first piston 169A and the vane; a portion between the second piston 169B and the vane; a portion between the main bearing 167 and the shaft 166; and a portion between the rotor 165 and the main bearing 167.

Therefore, for example, in FIG. 2, a combination of the portion between the first piston 169A and the vane and its vicinity and a combination of the portion between the second piston 169B and the vane and its vicinity are shown as respective slide regions 202A surrounded by the dotted-line frames. Similarly, a combination of the portion between the main bearing 167 and the shaft 166 and its vicinity is shown as a slide region 202B (region surrounded by the dotted-line frame), and a combination of the portion between the rotor 165 and the main bearing 167 and its vicinity is shown as a slide region 202C (region surrounded by the dotted line).

In the present disclosure, the increase of the carbene may be inhibited by the organic hetero compound or the silane compound serving as the carbene scavenger in the refrigeration cycle including the compressor 16. Moreover, in the compressor 16 in the refrigeration cycle, the increase of the carbene may be inhibited by the carbene scavenger (the organic hetero compound or the silane compound) in at least one of the electric discharge region 201A, the electric discharge region 201B, the slide region 202A, the slide region 202B, or the slide region 202C.

Especially, when the increase of the carbene can be inhibited by the carbene scavenger (the organic hetero compound or the silane compound) in the electric discharge regions 201A and 210B, an allowable value of the electric discharge energy can be increased, i.e., the value of the electric discharge energy at which the self-decomposition of the fluoroolefin does not proceed in a chain manner can be increased. Therefore, the disproportionation reaction can be further effectively inhibited or mitigated.

In the example shown in FIG. 2, two electric discharge regions and three slide regions are illustrated in the compressor 16. However, the number of electric discharge regions and the number of slide regions in the present disclosure are not limited to those in the example shown in FIG. 2. The number of electric discharge regions in the compressor 16 may be plural, and the number of slide regions may be one. In the present disclosure, "at least one of the electric discharge region or the slide region" denotes at least one region when there are a plurality of electric discharge regions and a plurality of slide regions in the compressor 16. Moreover, examples of "at least one of the electric discharge region or the slide region" include: only one or more electric discharge regions; only one or more slide regions; and all the electric discharge regions and the slide regions.

In the method of inhibiting the disproportionation reaction of the refrigeration-cycle working medium according to the present disclosure, the increase of the carbene in the refrigeration cycle may be inhibited by the above-described carbene scavenger, and as a result, the disproportionation reaction of the fluoroolefin contained in the refrigeration-cycle working medium may be inhibited or mitigated. Therefore, in the present disclosure, the upper limit of the concentration of the carbene in the refrigeration cycle is set in advance to inhibit the increase of the carbene, and it can be determined that when the concentration of the carbene falls below the upper limit by the carbene scavenger, the increase of the carbene is inhibited.

Or, in the present disclosure, when it is confirmed that the concentration of the carbene in the refrigeration cycle is practically zero, it can be determined that the increase of the carbene has been inhibited. To be specific, when the concentration of the carbene in the refrigeration cycle decreases to such a degree that the carbene is regarded as an impurity in the refrigeration-cycle working medium, and the carbene is not practically contained, the concentration of the carbene is regarded as practically zero, and it can be determined that the concentration of the carbene has been inhibited.

The upper limit of the concentration of the carbene is suitably set in accordance with various conditions including specific configurations of the refrigeration cycle and the compressor. However, the upper limit is not especially limited. A representative example of the upper limit of the concentration of the carbene may be set such that the mole fraction of the carbene is 0.35 (mol/mol) or less in at least one of the electric discharge region or the slide region.

According to the studies using simulations by the present inventors, it was found that when the mole fraction of the carbene is 0.35 or less, the disproportionation reaction can be inhibited. As described above, since the carbene tends to be generated in the electric discharge region and the slide region, the upper limit of the concentration of the carbene is set to the mole fraction of 0.35 or less in at least one of at least the electric discharge region or the slide region, and the carbene scavenger is added such that the concentration falls below the upper limit. Thus, the disproportionation reaction of the fluoroolefin can be effectively inhibited or mitigated.

Moreover, in the present disclosure, in addition to the upper limit of the concentration of the carbene, the increase of the carbene can be inhibited by reducing the temperature or the pressure at which the carbene tends to be generated by the self-decomposition of the fluoroolefin.

For example, in the present disclosure, the increase of the carbene may be inhibited by controlling the temperature in at least one of the electric discharge region or the slide region to 700 K or less. Or, the increase of the carbene may be inhibited by controlling the pressure in at least one of the electric discharge region or the slide region from the high-temperature high-pressure state to 2 MPa or less.

When, in the electric discharge region or the slide region, the upper limit of the temperature is set to 700 K or less, or the upper limit of the pressure is set to 2 MPa or less, the high-temperature high-pressure condition required for the occurrence of the self-decomposition reaction of the fluoroolefin and the propagation of the spontaneous self-decomposition reaction is not adequately satisfied. As a result, even if the self-decomposition of the fluoroolefin occurs, the generation of the carbene is significantly inhibited. As a result, the increase of the carbene can be effectively inhibited in the electric discharge region or the slide region.

The present disclosure includes not only the method of inhibiting the disproportionation reaction of the refrigeration-cycle working medium but also a method of capturing the carbene existing in the refrigeration cycle. Specifically, the method of capturing the carbene according to the present disclosure may be configured such that: in the refrigeration cycle including a refrigeration-cycle composition, the refrigeration-cycle composition contains a compound which reacts with the carbene and has in the chemical structure thereof the X-H bond (X is O, S, or Si) that is the bond between the hydrogen atom (H) and the oxygen atom (O), the sulfur atom (S), or the silicon atom (Si); and the compound reacts with the carbene existing in the refrigeration cycle to capture the carbene existing in the refrigeration cycle.

In the refrigeration-cycle working medium according to the present disclosure, the content of the organic hetero compound or the silane compound as the carbene scavenger is not especially limited. The organic hetero compound or the silane compound can be contained in any percentage depending on a specific composition of the refrigeration-cycle working medium, a specific configuration of the refrigeration cycle (including the compressor) to which the refrigeration-cycle working medium is applied, and various conditions, such as a use condition of the refrigeration cycle, as long as the functions of the refrigeration-cycle working medium and the refrigeration cycle are not impaired.

As a representative example, based on the content of the fluoroolefin contained in the refrigeration-cycle working medium, the organic hetero compound or the silane compound (carbene scavenger) may be contained in the refrigeration-cycle working medium in an amount of 30% by mass or less relative to 100 parts by mass of the fluoroolefin. When the content of the organic hetero compound or the silane compound is this upper limit or less, the disproportionation reaction of the fluoroolefin in the refrigeration-cycle working medium can be effectively inhibited or mitigated depending on various conditions.

On the other hand, the lower limit of the content of the organic hetero compound or the silane compound (carbene scavenger) in the refrigeration-cycle working medium is not especially limited. As a representative example, the content of the organic hetero compound or the silane compound (carbene scavenger) may be 1 mass % or more relative to 100 parts by mass of the fluoroolefin contained in the refrigeration-cycle working medium. When the content of the organic hetero compound or the silane compound (carbene scavenger) is 1 mass % or more, the effect of inhibiting the disproportionation reaction can be exhibited even more effectively. The lower limit of the content of the organic hetero compound or the silane compound (carbene scavenger) may be 5 mass % or more or may be 10 mass % or more.

The composition of the refrigeration-cycle working medium according to the present disclosure, other than the content of the carbene scavenger, will be described later. To be specific, the content of the fluoroolefin as the refrigerant component, components other than the refrigerant component and the carbene scavenger, the contents of those components, and the like will be described later.

As described above, in the refrigeration-cycle working medium and the method of inhibiting the disproportionation reaction according to the present disclosure, the organic hetero compound or the silane compound, which reacts with the carbene and has in the chemical structure thereof the X-H bond (X is O, S, or Si) that is the bond between the heteroatom (X) and the hydrogen atom (H), is added as the carbene scavenger to the refrigerant component containing fluoroolefin as the major component.

As described above, according to the diligent studies by the present inventors, it was found that the carbene generated in association with the self-decomposition is involved in the chain progression of the disproportionation reaction of the fluoroolefin. Therefore, the carbene is captured by the organic hetero compound or the silane compound serving as the carbene scavenger, and this can effectively inhibit the increase of the carbene in the refrigeration cycle. Thus, the disproportionation reaction of the fluoroolefin can be inhibited or mitigated.

Moreover, in the refrigeration-cycle working medium and the method of inhibiting the disproportionation reaction according to the present disclosure, fluoroolefin has the self-decomposing property, but each of the organic hetero compound and the silane compound serving as the carbene scavenger does not have the self-decomposing property. Therefore, when the organic hetero compound or the silane compound is contained in the refrigeration-cycle working medium, the stability of the working medium can be made relatively high.

### Configuration Example of Refrigeration Cycle System

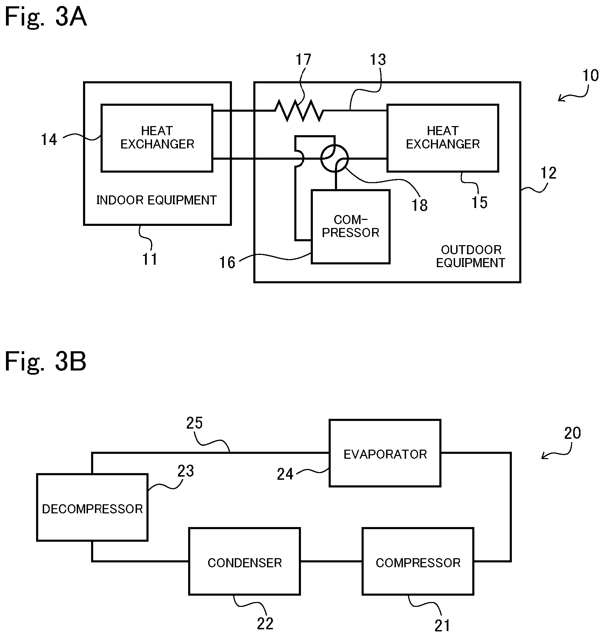

Next, the refrigeration cycle to which the method of inhibiting the disproportionation reaction of the refrigeration-cycle working medium according to the present disclosure is applied will be described with reference to representative "refrigeration cycle systems (refrigeration cycle apparatuses)" shown in FIGS. 3A and 3B.

A specific configuration of the refrigeration cycle system according to the present disclosure is not especially limited and may be such a configuration that elements, such as a compressor, a condenser, an expander, and an evaporator, are connected to each other through a pipe. Specific application examples of the refrigeration cycle system according to the present disclosure are not especially limited and include air-conditioning equipment (air conditioner), a refrigerator (home use, business use), a dehumidifier, a showcase, an ice maker, a heat pump water heater, a heat pump washing/drying machine, and a vending machine.

The air-conditioning equipment will be described as a representative application example of the refrigeration cycle system according to the present disclosure. Specifically, as schematically shown in a block diagram of FIG. 3A, air-conditioning equipment 10 according to the present embodiment includes indoor equipment 11, outdoor equipment 12, and a pipe 13 connecting the indoor equipment 11 and the outdoor equipment 12. The indoor equipment 11 includes a heat exchanger 14, and the outdoor equipment 12 includes a heat exchanger 15, the compressor 16, and a decompressor 17.

The heat exchanger 14 of the indoor equipment 11 and the heat exchanger 15 of the outdoor equipment 12 are annularly connected to each other by the pipe 13, and this forms the refrigeration cycle according to the present disclosure. Specifically, the heat exchanger 14 of the indoor equipment 11, the compressor 16, the heat exchanger 15 of the outdoor equipment 12, and the decompressor 17 are annularly connected to each other in this order by the pipe 13. Moreover, a four-way valve 18 for switching between cooling and heating is located at the pipe 13 that connects the heat exchanger 14, the compressor 16, and the heat exchanger 15 to each other. The indoor equipment 11 includes a fan, a temperature sensor, an operating device, and the like which are not shown, and the outdoor equipment 12 includes a blower, an accumulator, and the like which are not shown. Furthermore, various valve devices (including the four-way valve 18), a strainer, and the like which are not shown are located at the pipe 13.

The heat exchanger 14 included in the indoor equipment 11 performs heat exchange between indoor air taken into the indoor equipment 11 by the fan and a refrigerant flowing inside the heat exchanger 14. At the time of the heating, the indoor equipment 11 sends air, which has been heated by the heat exchange, to an indoor side. At the time of the cooling, the indoor equipment 11 sends air, which has been cooled by the heat exchange, to the indoor side. The heat exchanger 15 included in the outdoor equipment 12 performs heat exchange between outside air taken into the outdoor equipment 12 by the blower and a refrigerant flowing inside the heat exchanger 15.

Specific configurations of the indoor equipment 11 and the outdoor equipment 12 and specific configurations of the heat exchanger 14, the heat exchanger 15, the compressor 16, the decompressor 17, the four-way valve 18, the fan, the temperature sensor, the operating device, the blower, the accumulator, the other valve devices, the strainer, and the like are not especially limited, and known configurations can be suitably used.

One example of the operation of the air-conditioning equipment 10 shown in FIG. 3A will be specifically described. First, in a cooling operation or a dehumidifying operation, the compressor 16 of the outdoor equipment 12 compresses and discharges a gas refrigerant, and thus, the gas refrigerant is sent through the four-way valve 18 to the heat exchanger 15 of the outdoor equipment 12. Since the heat exchanger 15 performs the heat exchange between the outside air and the gas refrigerant, the gas refrigerant condenses into liquid. This liquid refrigerant is decompressed by the decompressor 17 and is sent to the heat exchanger 14 of the indoor equipment 11. In the heat exchanger 14, the liquid refrigerant evaporates by the heat exchange with the indoor air to become the gas refrigerant. This gas refrigerant returns through the four-way valve 18 to the compressor 16 of the outdoor equipment 12. The compressor 16 compresses the gas refrigerant and discharges the gas refrigerant through the four-way valve 18 to the heat exchanger 15 again.

Moreover, in a heating operation, the compressor 16 of the outdoor equipment 12 compresses and discharges the gas refrigerant, and thus, the gas refrigerant is sent through the four-way valve 18 to the heat exchanger 14 of the indoor equipment 11. In the heat exchanger 14, the gas refrigerant condenses into liquid by the heat exchange with the indoor air. This liquid refrigerant is decompressed by the decompressor 17 to become a gas-liquid two-phase refrigerant, and the gas-liquid two-phase refrigerant is sent to the heat exchanger 15 of the outdoor equipment 12. Since the heat exchanger 15 performs the heat exchange between the outside air and the gas-liquid two-phase refrigerant, the gas-liquid two-phase refrigerant evaporates to become the gas refrigerant, and the gas refrigerant returns to the compressor 16. The compressor 16 compresses the gas refrigerant and discharges the gas refrigerant through the four-way valve 18 to the heat exchanger 14 of the indoor equipment 11 again.

Moreover, a refrigerator will be described as another representative application example of the refrigeration cycle system (refrigeration cycle apparatus) according to the present disclosure. Specifically, for example, as schematically shown in a block diagram of FIG. 3B, a refrigerator 20 according to the present embodiment includes a compressor 21, a condenser 22, a decompressor 23, an evaporator 24, a pipe 25, and the like shown in FIG. 3. Moreover, although not shown, the refrigerator 20 further includes a casing as a main body, a blower, an operating device, a controller, and the like.

The compressor 21 compresses a refrigerant gas to generate a high-temperature high-pressure gas refrigerant. The condenser 22 cools the refrigerant to liquefy the refrigerant. The decompressor 23 is constituted by, for example, a capillary tube and decompresses the liquefied refrigerant (liquid refrigerant). The evaporator 24 evaporates the refrigerant to generate a low-temperature low-pressure gas refrigerant. The compressor 21, the condenser 22, the decompressor 23, and the evaporator 24 are annularly connected to each other in this order by the pipe 25 through which the refrigerant gas flows. Thus, the refrigeration cycle is configured.

The elements, such as the compressor 21, the condenser 22, the decompressor 23, the evaporator 24, the pipe 25, the main body casing, the blower, the operating device, and the controller, are not especially limited, and known elements can be suitably used. Moreover, the refrigerator 20 may include known elements other than the above elements.

One example of the operation of the refrigerator 20 shown in FIG. 3B will be specifically described. The compressor 21 compresses the gas refrigerant and discharges the gas refrigerant to the condenser 22. The condenser 22 cools the gas refrigerant to generate the liquid refrigerant. The liquid refrigerant is decompressed by passing through the decompressor 23, and is then sent to the evaporator 24. In the evaporator 24, the liquid refrigerant takes heat from surroundings to evaporate and become the gas refrigerant, and the gas refrigerant returns to the compressor 21. The compressor 21 compresses the gas refrigerant and discharges the gas refrigerant to the condenser 22 again.

Each of the air-conditioning equipment 10 and the refrigerator 20 is a configuration (refrigeration cycle system) including the refrigeration cycle configured by using the above-described refrigeration-cycle working medium. The fluoroolefin used in the refrigeration-cycle working medium has a satisfactory property as the refrigerant component and has a low ODP and a low GWP. In addition, as described above, the refrigeration-cycle working medium contains the organic hetero compound or the silane compound as the carbene scavenger.

Therefore, the carbene generated in association with the self-decomposition of the fluoroolefin is captured by the carbene scavenger. Thus, since the increase of the carbene can be effectively inhibited in the refrigeration cycle, the chain progression of the self-decomposition of the fluoroolefin can be inhibited or avoided. Therefore, the disproportionation reaction of the fluoroolefin can be inhibited or mitigated.

### Refrigeration-Cycle Working Medium and Refrigeration-Cycle Composition

The present disclosure also includes the refrigeration-cycle working medium which contains the above-described carbene scavenger. Specifically, as described above, the refrigeration-cycle working medium according to the present disclosure may contain: as the refrigerant component, the fluoroolefin that undergoes the disproportionation reaction; and the organic hetero compound or the silane compound as the carbene scavenger that captures the carbene generated in association with the disproportionation reaction. As described above, a specific example of the carbene scavenger may be a compound which reacts with the carbene and has in the chemical structure thereof the X-H bond (X is O, S, or Si) that is the bond between the heteroatom (X) and the hydrogen atom (H), and representative examples include: an organic compound having the X-H bond and having 4 or fewer carbon atoms and a derivative thereof; and monosilane having the X-H bond and a derivative thereof.

Moreover, the refrigeration-cycle working medium according to the present disclosure may contain, as the refrigerant component, at least a component that undergoes the disproportionation reaction. One example of the refrigerant component that undergoes the disproportionation reaction is fluoroolefin as described above, but is not limited to this. In the present disclosure, the refrigeration-cycle working medium may contain the refrigerant component (compound that can be used as a refrigerant) that undergoes the disproportionation reaction.

The refrigeration-cycle working medium according to the present disclosure may include, as one specific example of the refrigerant component, difluoromethane (HFC32, R32; chemical formula: CH₂F₂) in addition to fluoroolefin. In this case, when fluoroolefin is regarded as a "main component (main refrigerant component)" of the refrigerant component in the refrigeration-cycle working medium according to the present disclosure, difluoromethane is regarded as a "subcomponent (sub-refrigerant component)" of the refrigerant component in the refrigeration-cycle working medium according to the present disclosure. Difluoromethane has an ozone depletion potential (ODP) of zero and has a more satisfactory refrigerant performance than HCFC (hydrochlorofluorocarbon) that has been used so far.

Moreover, as the refrigerant component, the refrigeration-cycle working medium according to the present disclosure may contain at least fluoroolefin as the main refrigerant component and may further contain, as the sub-refrigerant component, a refrigerant component other than difluoromethane. Representative examples of such sub-refrigerant component include: hydrofluorocarbons (HFCs), such as difluoroethane, trifluoroethane, tetrafluoroethane, pentafluoroethane, pentafluoropropane, hexafluoropropane, heptafluoropropane, pentafluorobutane, and heptafluorocyclopentane; and hydrofluoroolefins (HFOs), such as monofluoropropene, trifluoropropene, tetrafluoropropene, pentafluoropropene, and hexafluorobutene. However, the sub-refrigerant component is not especially limited.

These HFCs and HFOs are known as being less likely to influence the ozone layer depletion and the global warming. Therefore, each of these HFCs and HFOs can be used as the refrigerant component together with fluoroolefin or together with fluoroolefin and difluoromethane. Only one of the above-described refrigerant components may be used together, or a suitable combination of two or more of the above-described refrigerant components may be used together.

The content of the sub-refrigerant component is not especially limited. In the present disclosure, at least fluoroolefin (main refrigerant component) is only required to be contained as the refrigerant component. Therefore, when the refrigeration-cycle working medium according to the present disclosure contains the sub-refrigerant component, the content of the fluoroolefin may be larger than the content of the sub-refrigerant component.

In the refrigeration-cycle working medium according to the present disclosure, it is important to lower the GWP as much as possible. Specifically, the GWP is desirably 200 or less (GWP ≤ 200) and is more desirably 150 or less (GWP ≤ 150). When as the refrigerant component, the difluoromethane that is the sub-refrigerant component is used together with the fluoroolefin that is the major refrigerant component, the upper limit of the content of the difluoromethane may be 30 mass % or less of a refrigerant related component total amount, 25 mass % or less of the refrigerant related component total amount, or 20 mass % or less of the refrigerant related component total amount.

When the content of the difluoromethane is 30 mass % or less, the GWP of the refrigeration-cycle working medium can be set to 200 or less. When the content of the difluoromethane is 20 mass % or less, the GWP of the refrigeration-cycle working medium can be set to 150 or less. The lower limit of the difluoromethane is not especially limited. In the refrigeration-cycle working medium according to the present disclosure, the sub-refrigerant component does not have to be contained, and therefore, when the sub-refrigerant component is used together with the fluoroolefin that is the main refrigerant component, the content of the sub-refrigerant component may be 0 mass % or more.

Since the refrigeration-cycle working medium according to the present disclosure is used in the refrigeration cycle system, the refrigeration-cycle working medium can be used together with lubricating oil (freezer oil) that lubricates the compressor included in the refrigeration cycle system.

As described above, in the refrigeration-cycle working medium according to the present disclosure, the fluoroolefin (1,1,2-trifluoroethylene, for example) that undergoes the disproportionation reaction and the difluoromethane may be used together as the refrigerant component, and the carbene scavenger may be further contained. Moreover, in the present disclosure, when the refrigeration-cycle working medium is used together with the lubricating oil, it can be regarded that a refrigeration-cycle composition (or a working medium-containing composition) is constituted by the refrigerant component, the carbene scavenger, the lubricating oil component, and other components. In the refrigeration-cycle working medium according to the present disclosure, the carbene scavenger may be mixed with the refrigerant component. However, the carbene scavenger may be mixed with the lubricating oil component depending on the situation.

As the lubricating oil component included in the refrigeration-cycle composition (the lubricating oil component used together with the refrigeration-cycle working medium), various lubricating oils known in the refrigeration cycle systems can be suitably used. Specific examples of the lubricating oil include ester lubricating oil, ether lubricating oil, glycol lubricating oil, alkylbenzene lubricating oil, fluorine lubricating oil, mineral oil, and hydrocarbon synthetic oil. However, the lubricating oil is not especially limited. Only one of these lubricating oils may be used, or a suitable combination of two or more of the lubricating oils may be used.

Moreover, various known additives other than the disproportionation inhibitor may be added to the refrigeration-cycle composition. Specific examples of the additives include various stabilizing agents, an oxidation inhibitor, a moisture scavenger, a metal deactivator, an abrasion preventing agent, an antifoaming agent, and a leak detection substance. However, the additive is not especially limited. The oxidation inhibitor is used to improve heat stability, oxidation resistance, chemical stability, and the like of the refrigerant component or the lubricating oil. The moisture scavenger is used to, when moisture enters the refrigeration cycle system, remove the moisture and especially inhibit a property change of the lubricating oil. The metal deactivator is used to inhibit or prevent a chemical reaction caused by catalysis of a metal component. The abrasion preventing agent is used to reduce wear at the slide portion in the compressor, especially wear during an operation in which pressure is high. The antifoaming agent is used to especially inhibit the generation of air bubbles in the lubricating oil.

Specific types of these additives are not especially limited, and known compounds and the like may be suitably used depending on various conditions. Moreover, as the additive, only one of the compounds and the like may be used, or a suitable combination of two or more of the compounds and the like may be used. Furthermore, the amount of additive added is not especially limited. A known amount of additive may be added as long as the property of the refrigeration-cycle working medium according to the present disclosure is not spoiled, or the property of the refrigeration-cycle composition containing the refrigeration-cycle working medium is not spoiled.

As above, in the method of inhibiting the disproportionation reaction of the refrigeration-cycle working medium according to the present disclosure, the refrigeration-cycle working medium contains, as the carbene scavenger, the organic hetero compound or the silane compound which has in the chemical structure thereof the X-H bond that is the bond between the hydrogen atom (H) and the heteroatom (X) that is O, S, or Si.

The X-H bond of the organic hetero compound or the silane compound reacts with the carbene to capture the carbene. Since the organic hetero compound or the silane compound having the X-H bond has substantially no self-decomposing property, the working medium containing the organic hetero compound or the silane compound as the carbene scavenger is stable. Since the carbene capturing reaction has a relatively high activation energy, the working medium is stable, and therefore, the carbene scavenger can effectively capture the carbene while avoiding situations where the carbene scavenger promotes the disproportionation reaction of the fluoroolefin. Thus, according to the present disclosure, the disproportionation reaction of the fluoroolefin can be inhibited even more effectively.

### Examples

The present invention will be more specifically described based on Examples and Comparative Example. However, the present invention is not limited to these. A skilled person can make various modifications, corrections, and alterations within the scope of the present invention.

### Experimental System for Disproportionation Reaction

A pressure sensor (GC61, manufactured by Nagano Keiki Co., Ltd.), a thermocouple (PL thermocouple gland PL-18-K-A4-T, manufactured by Conax Technologies), and an electric discharger were attached to a sealed pressure-resistant container (stainless steel sealed container; internal volume of 50 mL). The pressure sensor measures internal pressure in the pressure-resistant container. The thermocouple measures an internal temperature in the pressure-resistant container. The electric discharger generates electric discharge in the pressure-resistant container. Moreover, a gas cylinder of 1,1,2-trifluoroethylene was connected to the pressure-resistant container such that the pressure of the 1,1,2-trifluoroethylene was adjustable. Then, a mantle heater was installed to heat the entire pressure-resistant container, and a ribbon heater (flexible ribbon heater (1 m, 200 W), manufactured by Tokyo Technological Labo Co., Ltd.) was also installed so as to be able to heat pipe portions. Thus, an experimental system for the disproportionation reaction was constructed.

### Comparative Example 1

In the above experimental system, the 1,1,2-trifluoroethylene was introduced from the HFO1123 gas cylinder into the pressure-resistant container. Therefore, in the refrigeration-cycle working medium in the pressure-resistant container, the content of the 1,1,2-trifluoroethylene was 100 mass %. The stored energy of the electric discharger was 0.035 J, and the electric discharger generated electric discharge in the experimental system. The results are shown in Table 1.

### Example 1

In the experimental system, the 1,1,2-trifluoroethylene was introduced from the HFO1123 gas cylinder into the pressure-resistant container. In addition, hexafluoro-2-propanol (hexafluoroisopropyl alcohol; see Formula (1) above; each of R¹ and R³ is a CF₃ group, and R² is H) was added as the carbene scavenger such that the content thereof becomes 10 mass %. The stored energy of the electric discharger was 0.035 J, and the electric discharger generated electric discharge in the experimental system. The results are shown in Table 1.

### Example 2

The electric discharger generated electric discharge in the experimental system in the same manner as Example 1 except that the stored energy of the electric discharger was changed to 0.396 J. The results are shown in Table 1.

**Table 1**

| | Gas type | Temperature [°C] | Pressure [MPa] | Stored energy [J] | Number of consecutive discharges | Presence or absence of disproportionation reaction |
|---|---|---|---|---|---|---|
| Comparative Example 1 | HFO1123 | 120 | 2 | 0.035 | 1 | Present |
| Example 1 | HFO1123 hexafluoro-2-propanol | 120 | 2 | 0.035 | >50 | Absent |
| Example 2 | HFO1123 hexafluoro-2-propanol | 120 | 2 | 0.396 | >10 | Absent |

In Table 1, the temperature [°C] denotes the internal temperature in the pressure-resistant container. The pressure [MPa] denotes the internal pressure in the pressure-resistant container. The stored energy [J] denotes electrostatic energy stored in a capacitor unit installed inside the electric discharger. The number of consecutive discharges denotes the number of times the electric discharges occur consecutively at constant intervals under the relevant conditions. When the disproportionation reaction was observed after the number of consecutive discharges, "Present" was recorded in "Presence or absence of disproportionation reaction." When the disproportionation reaction was not observed after the number of consecutive discharges, "Absent" was recorded.

According to the results shown in Table 1, the disproportionation reaction was observed in Comparative Example 1, but the disproportionation reaction was not observed in Examples 1 and 2. Moreover, according to the results of Examples 1 and 2, the disproportionation reaction was not observed even when the stored energy was higher, provided that the amount of carbene scavenger (hexafluoro-2-propanol) added remained the same. Accordingly, it was confirmed that the disproportionation reaction of the fluoroolefin can be effectively inhibited by the introduction of the carbene scavenger.

### Example 3

As shown in Table 2, six types of compounds including hexafluoro-2-propanol used in Examples 1 and 2 as the carbene scavenger were selected as the compound having the X-H bond (X is O, S, or Si) in the chemical structure thereof. Regarding reactants and products in the reaction of these compounds with a CF₂ carbene, the equilibrium structures were calculated by density functional theory, and the reaction paths with the carbene and the intrinsic reaction coordinates were calculated by the global reaction route mapping (GRRM) method. The activation energy was calculated from the energy difference between the reactant and the transition state based on the obtained intrinsic reaction coordinate. The results are shown in Table 2. A lower activation energy indicates that the reactants can more easily reach the transition state and that the reaction is more likely to proceed thermodynamically.

**Table 2**

| Carbene scavenger | | Chemical formula (Rational formula) | Activation energy Ea (eV) |
|---|---|---|---|
| X-H | Compound name | | |
| O-H | Hexafluoro-2-propanol | CF₃CH(OH)CF₃ | 0.92 |
| | Methanol | CH₃OH | 0.89 |
| | Nonafluoro-tert-butanol | CF₃C(CF₃)₂OH | 0.85 |
| S-H | Methanethiol | CH₃SH | 0.65 |
| | Hexafluoro-2-propanethiol | CF₃CH(SH)CF₃ | 0.63 |
| | 2-propanethiol | CH₃CH(SH)CH₃ | 0.73 |
| Si-H | Hexafluorodimethylsilane | CF₃SiH₂CF₃ | 0.32 |
| | Dichlorosilane | SiH₂Cl₂ | 0.34 |
| | Dimethylsilane | (CH₃)₂SiH₂ | 0.91 |

As shown in Table 2, the activation energy in the reaction between hexafluoro-2-propanol as the carbene scavenger in Examples 1 and 2 and the CF₂ carbene was 0.92 eV. Regarding the other eight compounds shown in Table 2, the activation energies in the reactions with the CF₂ carbene were values smaller than 0.92 eV. Therefore, it is determined that all nine types of compounds (including hexafluoro-2-propanol) shown in Table 2 can easily undergo a reaction with the CF₂ carbene thermodynamically and effectively capture the CF₂ carbene. Thus, it is thought that each of the organic hetero compound and the silane compound having the X-H bond in the chemical structure thereof according to the present disclosure can inhibit the disproportionation reaction by carbene capturing.

### Additional Information

The present specification discloses the following technologies by the above embodiment.

### First Technology

A method of inhibiting a disproportionation reaction of a refrigeration-cycle working medium containing a refrigerant component that undergoes the disproportionation reaction, wherein
in a refrigeration cycle in which the refrigeration-cycle working medium circulates,
the refrigeration-cycle working medium contains, as a carbene scavenger, a compound which reacts with a carbene and has in a chemical structure thereof an X-H bond (X is O, S, or Si) that is a bond between a hydrogen atom (H) and an oxygen atom (O), a sulfur atom (S), or a silicon atom (Si),
the method including
inhibiting the disproportionation reaction of the refrigerant component in such a manner that the carbene scavenger captures the carbene generated by the disproportionation reaction of the refrigerant component.

### Second Technology

The method according to the first technology, wherein the refrigerant component that undergoes the disproportionation reaction is fluoroolefin.

### Third Technology

The method according to the first or second technology, wherein the compound having the X-H bond in the chemical structure thereof is an organic hetero compound or a silane compound.

### Fourth Technology

The method according to any one of the first to third technologies, wherein the carbene contains at least one selected from the group consisting of CF₂, CHF, and CH₂.

### Fifth Technology

The method according to the fourth technology, wherein the carbene scavenger inhibits an increase of the carbene in such a manner that the carbene reacts with the X-H bond to be converted into a methyl group or a fluoromethyl group.

### Sixth Technology

The method according to the fifth technology, wherein inhibiting the increase of the carbene includes a process in which a concentration of the carbene falls below a preset upper limit of the concentration of the carbene or a process in which the concentration of the carbene becomes practically zero.

### Seventh Technology

The method according to any one of the first to sixth technologies, wherein:
the refrigeration cycle includes a compressor; and
the compressor includes
   an electric discharge region where electric discharge occurs and
   a slide region including a slide portion where a plurality of slide members slide in a state where sliding surfaces thereof are in contact with each other,
the method including
inhibiting an increase of the carbene existing in at least one of the electric discharge region or the slide region.

### Eighth Technology

A refrigeration-cycle composition including:
a refrigerant component that undergoes a disproportionation reaction; and
a compound which
   serves as a carbene scavenger that captures a carbene generated by the disproportionation reaction of the refrigerant component,
   reacts with the carbene, and
   has in a chemical structure thereof an X-H bond (X is O, S, or Si) that is a bond between a hydrogen atom (H) and an oxygen atom (O), a sulfur atom (S), or a silicon atom (Si).

### Ninth Technology

The refrigeration-cycle composition according to the eighth technology, wherein the refrigerant component that undergoes the disproportionation reaction is fluoroolefin.

### Tenth Technology

The refrigeration-cycle composition according to the eighth or ninth technology, wherein the compound having the X-H bond in the chemical structure thereof is an organic hetero compound or a silane compound.

### Eleventh Technology

The refrigeration-cycle composition according to the tenth technology, wherein:
the organic hetero compound is an organic compound having 4 or fewer carbon atoms or a derivative thereof; and
the silane compound is monosilane (SiH₄) or a derivative thereof.

### Twelfth Technology

The refrigeration-cycle composition according to the eleventh technology, wherein the organic hetero compound is an alcohol, a thiol, an organosilane, or a derivative thereof.

### Thirteenth Technology

A refrigeration cycle apparatus including the refrigeration-cycle composition according to any one of the eighth to twelfth technologies.

### Fourteenth Technology

A method of capturing a carbene existing in a refrigeration cycle including a refrigeration-cycle composition, wherein:
in the refrigeration cycle,
the refrigeration-cycle composition contains a compound which reacts with the carbene and has in a chemical structure thereof an X-H bond (X is O, S, or Si) that is a bond between a hydrogen atom (H) and an oxygen atom (O), a sulfur atom (S), or a silicon atom (Si),
the method including
capturing the carbene existing in the refrigeration cycle in such a manner that the compound reacts with the carbene existing in the refrigeration cycle.

### Fifteenth Technology

A carbene scavenger for a refrigerant,
the carbene scavenger including a compound having in a chemical structure thereof an X-H bond (X is O, S, or Si) that is a bond between a hydrogen atom (H) and an oxygen atom (O), a sulfur atom (S), or a silicon atom (Si).

The present invention is not limited to the above-described embodiment and may be modified in various ways within the scope of the claims. Therefore, embodiments obtained by suitably combining technical means disclosed in different embodiments and/or plural modified examples are included in the technical scope of the present invention.

From the foregoing description, numerous modifications and other embodiments of the present invention are obvious to those skilled in the art. Accordingly, the foregoing description is to be construed as illustrative only, and is provided for the purpose of teaching those skilled in the art the best mode for carrying out the present invention. The structural and/or functional details may be substantially modified without departing from the scope of the present invention.

### Industrial Applicability

The present disclosure can be suitably used in the field of a working medium used for a refrigeration cycle, and in addition, can be widely and suitably used in the field of a refrigeration cycle system, such as air-conditioning equipment (air conditioner), a refrigerator (home use, business use), a dehumidifier, a showcase, an ice maker, a heat pump water heater, a heat pump washing/drying machine, or a vending machine.

### Reference Signs List

- 10: air-conditioning equipment (refrigeration cycle system)
- 11: indoor equipment
- 12: outdoor equipment
- 13: pipe
- 14: heat exchanger
- 15: heat exchanger
- 16: compressor
- 17: decompressor
- 18: four-way valve
- 20: refrigerator (refrigeration cycle system)
- 21: compressor
- 22: condenser
- 23: decompressor
- 24: evaporator
- 25: pipe
- 31: carbene (CF₂)
- 32: organic hetero compound (carbene scavenger)
- 33: compound having fluoromethyl group (singlet ground-state molecule)
- 161: sealed container
- 162: electric motor portion
- 163: compression mechanism portion
- 163A: first compression mechanism portion
- 163B: second compression mechanism portion
- 164: stator
- 165: rotor
- 166: shaft
- 167: main bearing
- 168: auxiliary bearing
- 169A: first piston
- 169B: second piston
- 170: accumulator
- 171A: first suction pipe
- 171B: second suction pipe
- 172A: first compression chamber
- 172B: second compression chamber
- 173: hermetic power supply terminal
- 174: wire
- 201: electric discharge region
- 201a: reaction intermediates accumulating region
- 201A: electric discharge region
- 201B: electric discharge region
- 202A: slide region
- 202B: slide region
- 202C: slide region

## Claims

1. A method of inhibiting a disproportionation reaction of a refrigeration-cycle working medium containing a refrigerant component that undergoes the disproportionation reaction,
wherein
in a refrigeration cycle in which the refrigeration-cycle working medium circulates,
the refrigeration-cycle working medium contains, as a carbene scavenger, a compound which reacts with a carbene and has in a chemical structure thereof an X-H bond (X is O, S, or Si) that is a bond between a hydrogen atom (H) and an oxygen atom (O), a sulfur atom (S), or a silicon atom (Si),
the method comprising
inhibiting the disproportionation reaction of the refrigerant component in such a manner that the carbene scavenger captures the carbene generated by the disproportionation reaction of the refrigerant component.

2. The method according to claim 1, wherein the refrigerant component that undergoes the disproportionation reaction is fluoroolefin.

3. The method according to claim 1, wherein the compound having the X-H bond in the chemical structure thereof is an organic hetero compound or a silane compound.

4. The method according to claim 1, wherein the carbene contains at least one selected from the group consisting of CF₂, CHF, and CH₂.

5. The method according to claim 4, wherein the carbene scavenger inhibits an increase of the carbene in such a manner that the carbene reacts with the X-H bond to be converted into a methyl group, a monofluoromethyl group, or a dimethylfluoromethyl group.

6. The method according to claim 5, wherein inhibiting the increase of the carbene includes a process in which a concentration of the carbene falls below a preset upper limit of the concentration of the carbene or a process in which the concentration of the carbene becomes practically zero.

7. The method according to any one of claims 1 to 6, wherein:
the refrigeration cycle includes a compressor; and
the compressor includes
an electric discharge region where electric discharge occurs and
a slide region including a slide portion where a plurality of slide members slide in a state where sliding surfaces thereof are in contact with each other,
the method comprising
inhibiting an increase of the carbene existing in at least one of the electric discharge region or the slide region.

8. A refrigeration-cycle composition comprising:
a refrigerant component that undergoes a disproportionation reaction; and
a compound which
serves as a carbene scavenger that captures a carbene generated by the disproportionation reaction of the refrigerant component,
reacts with the carbene, and
has in a chemical structure thereof an X-H bond (X is O, S, or Si) that is a bond between a hydrogen atom (H) and an oxygen atom (O), a sulfur atom (S), or a silicon atom (Si).

9. The refrigeration-cycle composition according to claim 8, wherein the refrigerant component that undergoes the disproportionation reaction is fluoroolefin.

10. The refrigeration-cycle composition according to claim 8, wherein the compound having the X-H bond in the chemical structure thereof is an organic hetero compound or a silane compound.

11. The refrigeration-cycle composition according to claim 10, wherein:
the organic hetero compound is an organic compound having 4 or fewer carbon atoms or a derivative thereof; and
the silane compound is monosilane (SiH₄) or a derivative thereof.

12. The refrigeration-cycle composition according to claim 11, wherein the organic hetero compound is an alcohol, a thiol, an organosilane, or a derivative thereof.

13. A refrigeration cycle apparatus comprising the refrigeration-cycle composition according to claim 8.

14. A method of capturing a carbene existing in a refrigeration cycle including a refrigeration-cycle composition, wherein:
in the refrigeration cycle,
the refrigeration-cycle composition contains a compound which reacts with the carbene and has in a chemical structure thereof an X-H bond (X is O, S, or Si) that is a bond between a hydrogen atom (H) and an oxygen atom (O), a sulfur atom (S), or a silicon atom (Si),
the method comprising
capturing the carbene existing in the refrigeration cycle in such a manner that the compound reacts with the carbene existing in the refrigeration cycle.

15. A carbene scavenger for a refrigerant,
the carbene scavenger comprising a compound having in a chemical structure thereof an X-H bond (X is O, S, or Si) that is a bond between a hydrogen atom (H) and an oxygen atom (O), a sulfur atom (S), or a silicon atom (Si).
